# EUROPÄISCHE PATENTSCHRIFT

(11) **EP 0 790 443 B1**
(45) Veröffentlichungstag und Bekanntmachung des Hinweises auf die Patenterteilung: **08.08.2001**
(21) Anmeldenummer: 97101662.1
(22) Anmeldetag: 04.02.1997
(51) Int. Cl.: F16H 63/30, F16H 63/20

(54) **Schaltvorrichtung ohne Leergangbewegung während einer Einrückbewegung des Rückwärtsganges**
Shift mechanism avoiding neutral during engagement of reverse gear
Dispositif de changement de vitesses permettant l'engagement de la marche arrière sans passage au point mort

(30) Priorität: 17.02.1996 DE 19605980
(43) Veröffentlichungstag der Anmeldung: 20.08.1997
(73) Patentinhaber: Ford Global Technologies, Inc., Dearborn, Michigan 48126 (US)
(72) Erfinder: Deidewig, Hartmut, 51503 Roesrath (DE); Chazotte, Jean-Pierre, 50678 Koeln (DE); Doelling, Matthias, 51429 Bergisch Gladbach (DE); Sabel, Gustav, 50765 Koeln (DE)
(74) Vertreter: Messulam, Alec Moses

(56) Entgegenhaltungen:
- DE-A- 3 603 339
- FR-A- 2 299 562
- GB-A- 2 127 114
- US-A- 4 228 693

## Beschreibung

Die Erfindung bezieht sich auf eine Schaltvorrichtung für Wechselgetriebe, insbesondere für Kraftfahrzeuge, der im Oberbegriff des Patentanspruches 1 erläuterten Art.

Aus der DE-OS 23 18 451 ist eine Schaltvorrichtung für Wechselgetriebe, insbesondere für Kraftfahrzeuge bekannt, bei der auf einer im Getriebegehäuse axial verschiebbaren Schaltstange relativ hierzu verschiebbare Schaltgabelbrücken angeordnet sind, deren Verschiebung über einen in entsprechende Schaltausnehmungen in Schaltarmen eingreifenden Schaltfinger einer Schaltwelle bewegt wird, um die verschiedenen Gangstufen zu schalten.

Aus der gattungsbildenden DE-PS 26 03 339 ist eine Schaltvorrichtung für Wechselgetriebe, insbesondere für Kraftfahrzeuge bekannt, bei der über eine axial verschiebbare Schaltstange zum Schalten eines Vorwärtsganges auch ein Rückwärtsgang geschaltet wird, wobei der Rückwärtsgang über eine Schaltschwinge eingerückt wird, die über eine Bolzen/Winkelschlitz-Verbindung betätigt wird.

Bei der zweitgenannten Schaltvorrichtung muß die axial verschiebbare Schaltstange Bewegungen in beiden Einrückrichtungen ausführen, wodurch für die durch die Schaltgabel für den Vorwärtsgang betätigte Schiebemuffe auch ein entsprechender Leerweg in Richtung Einrücken des Rückwärtsganges vorgesehen werden muß.

Die Aufgabe der Erfindung ist es, eine Schaltvorrichtung für Wechselgetriebe, insbesondere für Kraftfahrzeuge der im Oberbegriff des Patentanspruches 1 erläuterten Art, wie sie auch bei einem Getriebe der Anmelderin seit einigen Jahren im Einsatz ist, derart zu verbessern, daß die axial verschiebbare Schaltstange während einer Einrückbewegung des Rückwärtsganges keine Leergangbewegung ausführen muß.

Gemäß der Erfindung wird diese Aufgabe gelöst, indem bei einer Schaltvorrichtung für Wechselgetriebe, insbesondere für Kraftfahrzeuge, der im Oberbegriff des Patentanspruches 1 erläuterten Art, die im Kennzeichenteil des Patentanspruches 1 aufgezeigten Merkmale angewendet werden.

Dadurch, daß eine auf der axial verschiebbaren Schaltstange axial verschiebbare Schaltgabelbrücke für einen Vorwärtsgang und dem Rückwärtsgang ein um einen Drehpunkt schwenkbarer Winkelhebel vorgesehen ist, dessen einer Arm über eine Bolzen/Gabel-Verbindung an der Schaltstange angreift und dessen anderer Arm sich über eine Bogenschlitz/Bolzen-Verbindung an einem Festpunkt im Gehäuse abstützt, derart, daß bei einer Bewegung der Schaltgabelbrücke in Richtung Einrücken des 5. Ganges eine Mitnahme der Schaltstange und ein Einrücken des 5. Ganges erfolgt und bei einer Bewegung der Schaltgabelbrücke in Richtung Einrücken des Rückwärtsganges ein Stationärhalten der Schaltstange durch die Geometrie des Winkelhebels bewirkt wird und über die Bewegung der Schaltgabelbrücke und des mit ihr verbundenen Bolzens und der Bolzen/ Winkelschlitz-Verbindung zu einer Schaltschwinge für den Rückwärtsgang ein Einrücken des Rückwärtsganges erfolgt, braucht für die Verschiebung der Schaltstange kein Leerweg innerhalb des Getriebegehäuses vorgesehen zu werden.

In den Ansprüchen 2 bis 4 sind weitere Einzelheiten der Erfindung näher erläutert.

Die Erfindung wird anhand von in den beiliegenden Zeichnungen gezeigter Ausführungsbeispiele näher erläutert. Es zeigt:
- Fig. 1: eine Art Explosionsdarstellung, in der die an einem Schaltvorrichtungsdeckel vormontierte äußere Schaltvorrichtung mit der Schaltwelle und dem Schaltfinger räumlich getrennt von der inneren Schaltvorrichtung für den 5. Gang und den Rückwärtsgang gezeigt ist;

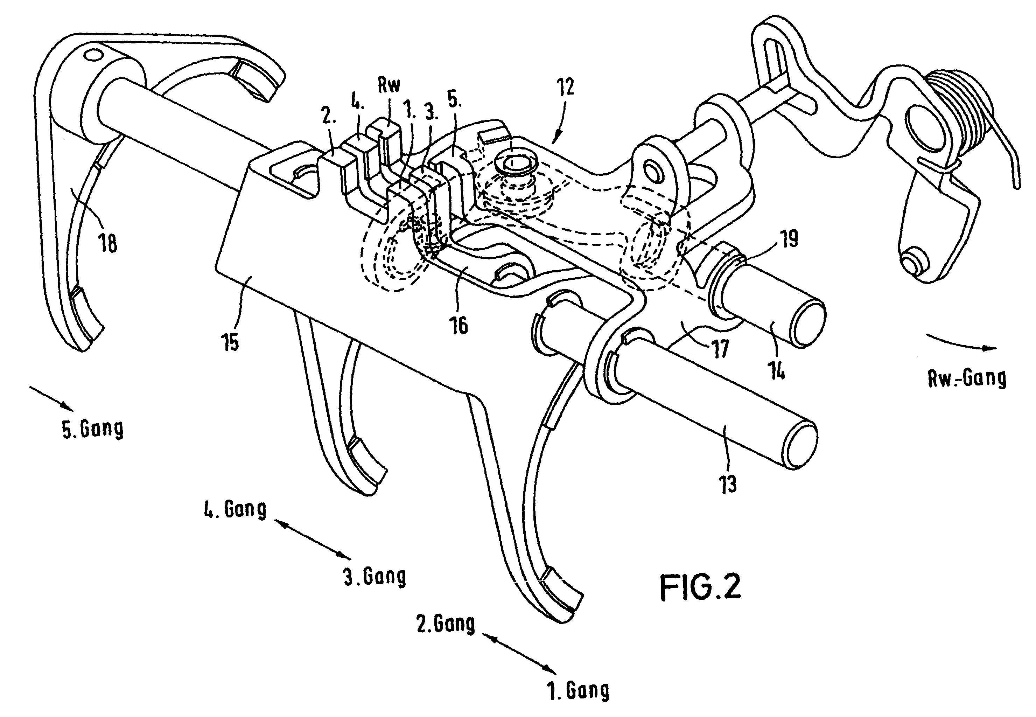

- Fig. 2: eine vergrößerte Darstellung der inneren Schaltvorrichtung gemäß Fig. 1, wobei hier alle drei für die Schaltstufen 1 bis 5 und RW erforderlichen Schaltbrücken eingezeichnet sind;
- Fig. 3: eine Darstellung der inneren Schaltvorrichtung, bei der nur die Schaltbrücke für den 5. Gang und den Rückwärtsgang in ihrer Neutralstellung mit Angabe der Einrückbewegungen gezeigt ist;
- Fig. 4: eine Darstellung der inneren Schaltvorrichtung für den 5. Gang und den Rückwärtsgang in Schaltstellung des 5. Ganges und
- Fig. 5: eine Darstellung der inneren Schaltvorrichtung für den 5. Gang und den Rückwärtsgang in Schaltstellung des Rückwärtsganges.

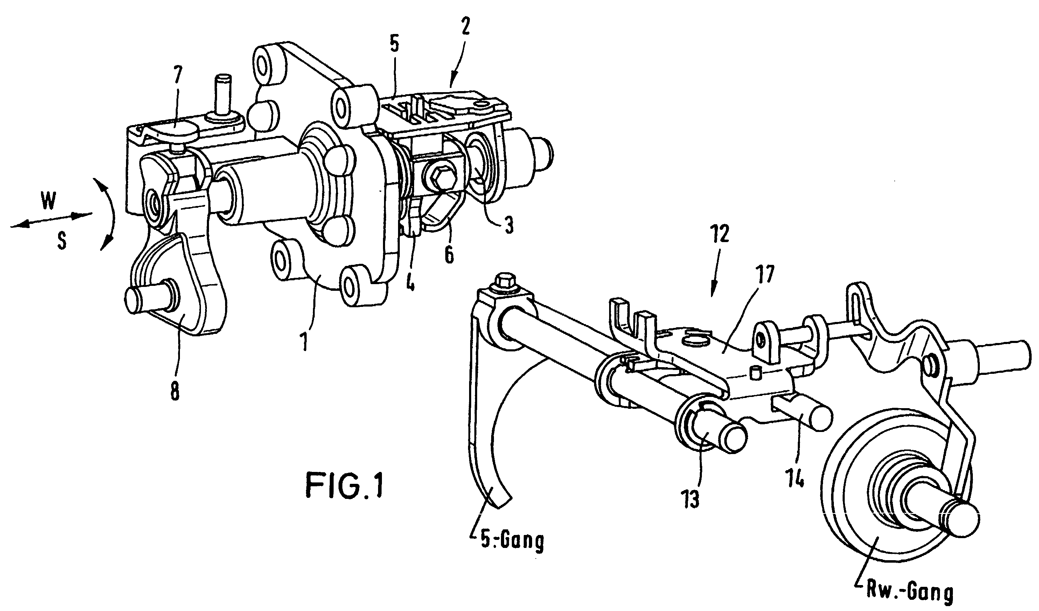

In Fig. 1 ist im oberen Teil der Zeichnung ein Schaltvorrichtungsdeckel 1 gezeigt, an dem die gesamte äußere Schaltvorrichtung 2, die im wesentlichen aus einer Schaltwelle 3 mit einem Schaltfinger 4 sowie einer Kulissenführung 5 und einer Sperrvorrichtung 6 besteht, montiert ist.

Die Schaltwelle 3 ist außen über Hebeanordnungen 7 und 8, die z.B. von Bowdenzügen betätigt werden, zum Wählen W axial verschiebbar und zum Schalten S radial verschwenkbar im Schaltvorrichtungsdeckel 1 gelagert.

Der Aufbau der äußeren Schaltvorrichtung 2 ist hierbei ähnlich einer bereits an Fahrzeugen der Anmelderin angewendeten Baueinheit ausgebildet und wird im Zusammenhang der vorliegenden Erfindung nicht weiter erläutert.

Die vorliegende Erfindung ist in der im unteren Teil der Fig. 1 gezeigten inneren Schaltvorrichtung 12 enthalten, die sich in erster Linie auf die Schaltvorrichtung für den 5. Gang und den Rückwärtsgang bezieht.

Die innere Schaltvorrichtung 12 besteht im wesentlichen aus einer axial verschiebbaren Schaltstange 13, die im Getriebegehäuse auf nicht näher erläuterte Weise geführt ist. Parallel zur axial verschiebbaren Schaltstange 13 ist eine axial feststehende Führungsstange 14 im Getriebegehäuse angeordnet.

Auf der axial verschiebbaren Schaltstange 13 sind mehrere Schaltgabelbrücken relativ hierzu verschiebbar angeordnet, so eine Schaltgabelbrücke 15 zum Schalten des 1. und 2. Ganges, eine Schaltgabelbrücke 16 zum Schalten des 3. und 4. Ganges und eine Schaltgabelbrücke 17 zum Schalten des 5. Ganges und des Rückwärtsganges.

Auf der axial verschiebbaren Schaltstange 13 ist eine Schaltgabel 18 zum Schalten des 5. Ganges fest angeordnet. Die Schaltgabelbrücke 17 für den 5. Gang und den Rückwärtsgang stützt sich hierbei an der feststehenden Führungsstange 14 über Halbrundführungen 19 gegen Verdrehen ab.

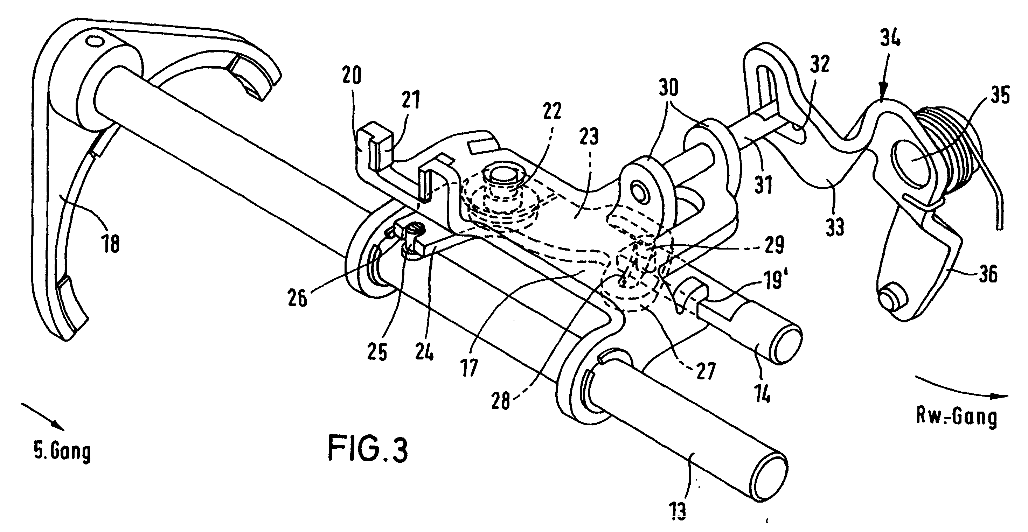

Die Erfindung wird nunmehr im wesentlichen im Zusammenhang mit Fig. 3 erläutert, in der nur die zum Schalten des 5. Ganges und des Rückwärtsganges erforderlichen Bauteile eingezeichnet sind.

Auf der axial verschiebbaren Schaltstange 13 und der parallel hierzu angeordneten feststehenden Führungsstange 14 ist die Schaltgabebrücke 17 für den 5. Gang und den Rückwärtsgang gegen Verdrehung abgestützt angeordnet, wobei hier die Abstützung gegen Verdrehung in Form einer Flachführung 19' ausgebildet ist.

Die Schaltgabelbrücke 17 weist einen Schaltarm 20 mit einer Schaltausnehmung 21 auf, über die sie über den Schaltfinger 4 in bekannter Weise betätigbar ist.

An der Schaltgabelbrücke 17 ist weiterhin ein Bolzen 22 angeordnet, um den ein Winkelhebel 23 verschwenkbar gelagert ist. Der Winkelhebel 23 weist einen Arm 24 auf, mit dem er über eine Bolzen/Gabel-Verbindung in Wirkeingriff mit der axial verschiebbaren Schaltstange 13 steht. Der Winkelhebel 23 weist einen weiteren Arm 27 auf, der einen Bogenschlitz 28 aufweist, in den ein Bolzen 29 eingreift der an einem Festpunkt im Gehäuse, hier die feststehende Führungsstange 14, angeordnet ist.

An der Schaltgabelbrücke 17 sind Haltelaschen 30 für einen Schaltstift 31 ausgebildet, der in einen Winkelschlitz 32 in einem Arm 33 einer Schaltschwinge 34 eingreift, die um einen Schwenkbolzen 35 drehbar gelagert ist und über dessen anderen Arm 36 die Schaltgabel des Rückwärtsganges betätigt wird.

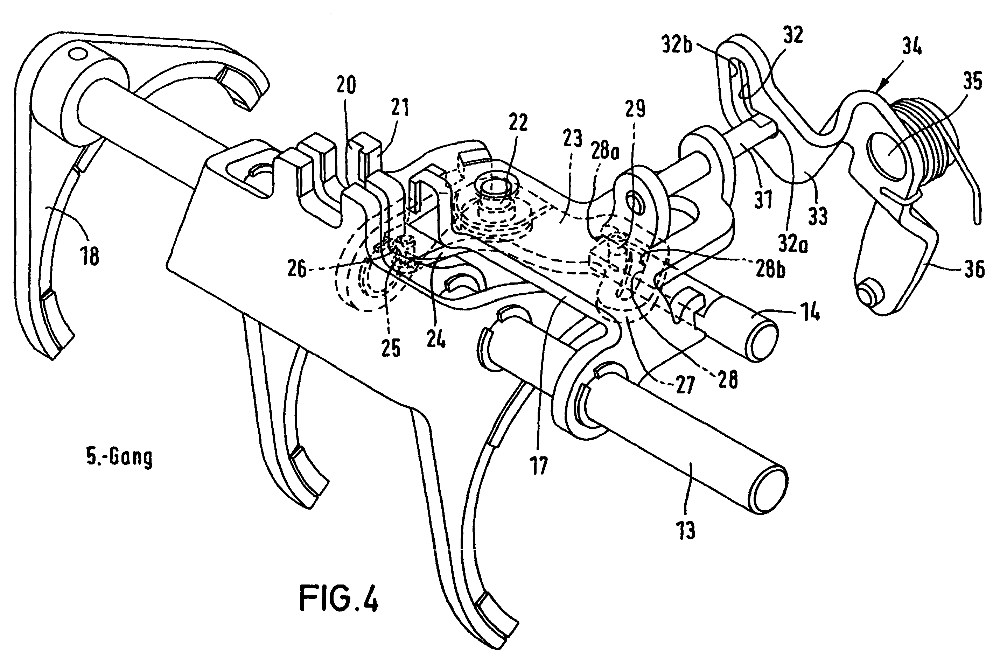

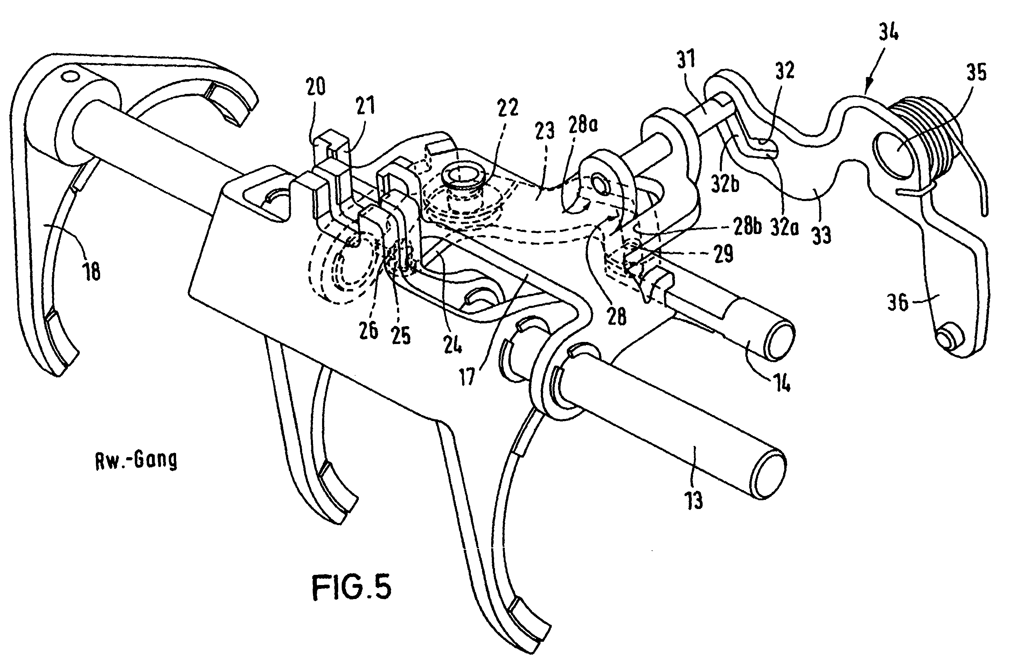

Die Funktionsweise der Erfindung wird nachfolgend in Verbindung mit den Figuren 4 und 5 näher erläutert.

Wie aus Fig. 4 ersichtlich, ist die Schaltgabelbrücke 17 in Richtung Einrücken des 5. Ganges verschoben und durch die Tatsache, daß sich der mit der Schaltgabelbrücke 17 verbundene Winkelhebel 23 in seinem Bogenschlitz 28 in dem Abschnitt 28a befindet, der sich parallel zur Schaltstange 13 erstreckt, ist ein Ausschwenken des Winkelhebels 23 nicht möglich und die Bolzen/Gabel-Verbindung 25/26 nimmt die Schaltstange 13 mit und mittels der Schaltgabel 18 wird der 5. Gang eingerückt.

Während dieser Bewegung bewegt sich der Schaltstift 31 in dem Abschnitt 32a des Winkelschlitzes 32 im Arm 33 der Schaltschwinge 34 für den Rückwärtsgang und bewirkt kein Verschwenken dieser Schaltschwinge.

Wie aus Fig. 5 ersichtlich, ist die Schaltgabelbrücke 17 in Richtung Einrücken des Rückwärtsganges verschoben und der im Gehäuse feste Bolzen 29 durchläuft während dieser Bewegung einen geometrisch besonders geformten Abschnitt 28b des Bogenschlitzes 28, der zu einer Ausschwenkbewegung des Winkelhebels 23 führt, die über die Bolzen/Gabel-Verbindung 25/26 die Schaltstange 13 stationär hält.

Da sich der an der Schaltgabelbrücke 17 befestigte Schaltstift 31 nunmehr in dem anderen Abschnitt 32b des Winkelschlitzes 32 an der Schaltschwinge 34 für den Rückwärtsgang bewegt, erfolgt ein Verschwenken dieser Schaltschwinge 34 und damit über deren Arm 36 ein Einrücken des Rückwärtsganges.

Es wird darauf hingewiesen, daß die Art und Weise der Führung der Schaltbrücken auf der axial verschiebbaren Schaltstange und die Ausbildung der verschiedenen Bolzen/Schlitz-Verbindungen nur beispielsweise aufgezeigt sind und selbstverständlich in verschiedenen konstruktiven Varianten ausgeführt werden können.

## Patentansprüche

1. Schaltvorrichtung für Wechselgetriebe, insbesondere für Kraftfahrzeuge,
- mit mehreren auf einer im Getriebegehäuse angeordneten Schaltstange (13) relativ hierzu verschiebbaren Schaltgabelbrücken (15, 16 und 17), wobei die Verschiebung einer jeden Schaltgabelbrücke über einen in entsprechende Schaltausnehmungen in Schaltarmen eingreifenden Schaltfinger (4) einer Schaltwelle (3) bewirkt wird, um Gangstufen des Wechselgetriebes zu schalten,
- wobei die eine Schaltgabelbrücke (17) der axial verschiebbaren Schaltgabelbrücken (15-17) zum Schalten eines Vorwärtsganges und eines Rückwärtsganges dient,
- und wobei die eine Schaltgabelbrücke (17) mit der Schaltstange (13) zum Schalten des Vorwärtsganges mittels der auf der Schaltstange befestigten Schaltgabel (18) und mit einer Schaltschwinge (34) zum Schalten des Rückwärtsganges derart verbunden ist, daß mit der Bewegung der Schaltgabelbrücke (17) in der einen Richtung der Vorwärtsgang und mit der Bewegung der Schaltgabelbrücke in der entgegengesetzten Richtung der Rückwärtsgang eingerückt wird,
dadurch gekennzeichnet, daß
- an der axial verschiebbaren Schaltgabelbrücke (17) für den Vorwärtsgang und den Rückwärtsgang ein um einen Bolzen (22) schwenkbarer Winkelhebel (23) angeordnet ist, dessen einer Arm (24) über eine Bolzen/Gabel-Verbindung (25/26) an der Schaltstange (13) angreift und dessen anderer Arm (27) sich über eine Bogenschlitz/Bolzen-Verbindung (28/29) an einer feststehenden Führungsstange (14) am Gehäuse abstützt, derart, daß
- bei Bewegung der Schaltgabelbrücke (17) in Richtung Einrücken des Vorwärtsganges eine Mitnahme der Schaltstange (13) und ein Einrücken des Vorwärtsganges erfolgt,
- bei entgegengesetzter Bewegung der Schaltgabelbrücke (17) in Richtung Einrücken des Rückwärtsganges die Schaltstange (13) stationär unverschieblich gehalten wird
- und über die Bewegung der Schaltgabelbrücke (17) und einer an ihr angeordneten Schaltstift/Winkelschlitz-Verbindung (31/32) zu der Schaltschwinge (34) für den Rückwärtsgang ein Einrücken des Rückwärtsganges erfolgt.

2. Schaltvorrichtung für Wechselgetriebe nach Anspruch 1,
**dadurch gekennzeichnet**, daß
- die auf der axial verschiebbaren Schaltstange (13) verschiebbare Schaltgabelbrücke (17) an der parallelen, feststehenden Führungsstange (14) gegen Verdrehen abgestützt ist und diese Führungsstange (14) den Bolzen (29) für die Bogenschlitz/Bolzen-Verbindung (28/29) des Winkelhebels (23) trägt.

3. Schaltvorrichtung für Wechselgetriebe nach den Ansprüchen 1 und 2,
**dadurch gekennzeichnet**, daß
- die Schaltgabelbrücke (17) auf der feststehenden Führungsstange (14) über Halbrundführungen (19) gegen Verdrehung abgestützt ist.

4. Schaltvorrichtung für Wechselgetriebe nach den Ansprüchen 1 und 2,
**dadurch gekennzeichnet**, daß
- die Schaltgabelbrücke (17) an der feststehenden Führungsstange (14) mit einer Flachführung (19') gegen Verdrehung abgestützt ist.

## Claims

1. Shift mechanism for gearboxes, especially for motor vehicles,
- with several selector fork bridges (15, 16, 17) on a shift rod (13) positioned in the gearbox, wherein the selector forks (15, 16, 17) can be moved relative hereto, wherein the displacement of a selector fork bridge is brought about by a shift finger (4) of a shift shaft (3) engaging in corresponding shift recesses in shift arms, in order to shift gear stages of the gearbox,
- wherein one selector fork bridge (17) of the axially displaceable selector fork bridges (15-17) serves for shifting a forward gear and a reverse gear,
- and wherein one selector fork bridge (17) is connected with the shift rod (13) for shifting the forward gear by means of a selector fork (18) secured on the shift rod and with a shift lever (34) for shifting the reverse gear in such a way that with the movement of the selector fork bridge (17) in one direction the forward gear is engaged, and with the movement of the selector fork bridge in the contrary direction the reverse gear is engaged,
characterised in that
- on the axially displaceable selector fork bridge (17) for the forward gear and the reverse gear there is a bent lever (23) which can be swivelled around a bolt (22), one arm (24) of which contacts on the shift rod (13) via a bolt / fork connection (25 / 26) and the other arm (27) of which supports itself on a fixed guide rod (14) on the gearbox via a curved recess / bolt connection (28 / 29) in such a way that
- upon movement of the selector fork bridge (17) in the direction of engagement of the forward gear, the shift rod (13) is taken along and the forward gear is engaged,
- upon contrary movement of the selector fork bridge (17) in the direction of engagement of the reverse gear, the shift rod (13) is maintained stationary in an undisplaceable way
- and via the movement of the selector fork bridge (17) and a shift pin / angled recess connection (31 / 32) positioned on it to the shift lever (34) for the reverse gear, the reverse gear is engaged.

2. Shift mechanism for gearboxes according to Claim 1,
characterised in that
the selector fork bridge (17) which can be displaced on the axially displaceable shift rod (13) is supported on the fixed guide rod (14) against twisting and this guide rod (14) carries the bolt (29) for the curved recess / bolt connection (28 / 29) of the bent lever (23).

3. Shift mechanism for gearboxes according to Claims 1 and 2,
characterised in that
the selector fork bridge (17) is supported on the fixed guide rod (14) against twisting via half-round guides (19) .

4. Shift mechanism for gearboxes according to Claims 1 and 2, characterised in that
the selector fork bridge (17) is supported on the fixed guide rod (14) against twisting with a flat guide (19').

## Revendications

1. Dispositif de changement de vitesses pour boîtes de vitesses, notamment pour véhicules à moteur,
- comprenant plusieurs ponts de fourchette de boîte de vitesses (15, 16 et 17) placés sur une tringle de changement de vitesses (13) logée dans le carter de la boîte de vitesse, qui peuvent coulisser par rapport à cette tringle de changement de vitesses, sachant que le coulissement de chaque pont de fourchette de boîte de vitesses est provoqué par un sélecteur (4) d'un arbre de commande (3) se logeant dans des évidements correspondants dans des bras de commande afin de passer les vitesses de la boîte de vitesses,
- sachant que l'un (17) des ponts de fourchette de boîte de vitesses coulissant axialement (15-17) sert à passer une marche avant et une marche arrière,
- et sachant que l'un des ponts de fourchette de boîte de vitesses (17) est relié à la tringle de changement de vitesses (13) pour passer la marche avant au moyen de la fourchette de changement de vitesses (18) fixée sur la tringle de changement de vitesses et à une bielle oscillante (34) pour passer la marche arrière, et ce, de telle manière que le déplacement dans un sens du pont de fourchette de boîte de vitesses (17) enclenche la marche avant et le déplacement dans le sens opposé, la marche arrière,
caractérisé en ce que
- sur le pont de fourchette de boîte de vitesses (17) pour la marche avant et la marche arrière, qui est mobile axialement, est disposé un levier coudé (23) pivotant autour d'un axe (22), dont l'un des bras (24) est en prise avec la tringle de changement de vitesses (13) par le biais d'un dispositif d'assemblage à axe et fourchette (25/26) et dont l'autre bras (27) prend appui sur une tringle de guidage fixe (14) du carter par le biais d'un dispositif d'assemblage à fente en arc de cercle et axe (28, 29), et ce, de telle manière
- qu'un déplacement du pont de fourchette de boîte de vitesses (17) visant à l'engagement de la marche avant provoque un entraînement de la tringle de changement de vitesses (13) et l'engagement de la marche avant,
- qu'un déplacement en sens inverse du pont de fourchette de boîte de vitesses (17) visant à l'engagement de la marche arrière maintient immobile la tringle de changement de vitesses (13), et
- que le déplacement du pont de fourchette de boîte de vitesses (17) et d'un dispositif d'assemblage à broche et fente coudée (31/32) disposé sur ce dernier par rapport à la bielle oscillante (34) de la marche arrière provoque l'engagement de la marche arrière.

2. Dispositif de changement de vitesses pour boîtes de vitesses selon la revendication 1, caractérisé en ce que le pont de fourchette de boîte de vitesses (17) pouvant coulisser sur la tringle de changement de vitesses (13) mobile axialement prend appui sur la tringle de guidage fixe parallèle (14) pour éviter qu'il ne tourne, et en ce que cette tringle de guidage (14) porte l'axe (29) pour le dispositif d'assemblage à fente en arc de cercle et axe (28/29) du levier coudé (23).

3. Dispositif de changement de vitesses pour boîtes de vitesses selon les revendications 1 et 2, caractérisé en ce que le pont de fourchette de boîte de vitesses (17) est supporté sur la tringle de guidage fixe (14) par des guides semi-ronds (19) pour éviter qu'il ne tourne.

4. Dispositif de changement de vitesses pour boîtes de vitesses selon les revendications 1 et 2, caractérisé en ce que le pont de fourchette de boîte de vitesses (17) est supporté sur la tringle de guidage fixe (14) à l'aide d'un guide plat (19') pour éviter qu'il ne tourne.
